(19) Europäisches Patentamt
European Patent Office
Office européen des brevets

(11) EP 0 594 440 B1

(12) **EUROPEAN PATENT SPECIFICATION**

(45) Date of publication and mention of the grant of the patent:
**28.05.1997 Bulletin 1997/22**

(51) Int Cl.[6]: **C09D 5/14**, C09D 4/00, C04B 41/49, A01N 43/80

(21) Application number: **93308402.2**

(22) Date of filing: **21.10.1993**

(54) **Water-soluble or water-dispersible, organic siliconcontaining composition having excellent antibacterial and antifungal properties**

Wasserlösbare oder Wasserdispergierbare, organisches Silizium enthaltende Zusammensetzung die antibakterielle und Antipilz Eigenschaften aufweisen

Composition aqua-soluble ou aqua-dispersable contenant de la silice organique ayant des propriétés anti-bactérielles et anti-fongiside

(84) Designated Contracting States:
**DE FR GB**

(30) Priority: **23.10.1992 JP 309287/92**
**04.12.1992 JP 350734/92**
**26.02.1993 JP 38451/93**

(43) Date of publication of application:
**27.04.1994 Bulletin 1994/17**

(73) Proprietor: **TOYO INK MANUFACTURING CO., LTD.**
**Chuo-ku, Tokyo 104 (JP)**

(72) Inventors:
- **Suzuki, Takehiro, c/o Toyo Ink Manu. Co. Ltd. Tokyo (JP)**
- **Zushi, Kenji, c/o Toyo Ink Manu. Co. Ltd. Tokyo (JP)**
- **Okayama, Akio, c/o Toyo Ink Manu. Co. Ltd. Tokyo (JP)**

(74) Representative: **Woods, Geoffrey Corlett**
**J.A. KEMP & CO.**
**14 South Square**
**Gray's Inn**
**London WC1R 5LX (GB)**

(56) References cited:
**EP-A- 0 412 515**
**EP-A- 0 476 452**
**EP-A- 0 476 943**
**EP-A- 0 490 565**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 594 440 B1

## Description

The present invention relates to a water-soluble or water-dispersible (to be simply referred to as "water-dispersible" hereinafter) organic silicon-containing composition useful as a water-dispersible, water-absorption preventer which can penetrate a substrate such as concrete ("penetration-type" hereinafter) and is excellent in antibacterial properties and antimold and antifungal (simply "antifungal" hereinafter) properties.

Concrete structures used in housings, public buildings, roads, railways and electric power facilities have been considered to be semi-permanent structures which are excellent in durability and require almost no maintenance. However, the concrete structures are undoubtedly deteriorated due to one or some of salt damage in coastal areas, cracking caused by an alkali-aggregate reaction, freezing damage in cold areas and carbonation by carbon dioxide in air. Further, as is recently increasingly pointed out as a serious social issue, the concrete structures undergo early deterioration due to acid rain. These phenomena are reportedly caused by water which has externally penetrated concrete structures.

For preventing the penetration of water into concrete, a "coating" composition is used, and the "coating" composition is largely classified into a film-forming coating composition and a film formation-free composition. The film-forming coating composition has a defect in that a coating formed from it is liable to have pin holes through which salt and water penetrate concrete to corrode reinforcing steel and that the corroded reinforcing steel swells and deteriorates the concrete. Further, the film-forming coating composition also has a problem in that a coating formed therefrom is liable to peel off (called "blister"). A water repellent material which imparts water repellency without altering the appearance of a concrete (substrate) surface forms a very thin film on the concrete surface, and comes under the film-forming coating composition. Since, however, the film is very thin and poor in durability, the water repellency does not last long.

On the other hand, concerning the film formation-free composition, it is widely known that alkylalkoxysilane is useful as a water-absorption preventer which can penetrate construction and civil engineering materials such as concrete. The alkylalkoxysilane is generally used in the form of a solution in a solvent, and the solvent is selected from a variety of solvents. The film formation-free composition does not alter the surface state of concrete, but it penetrates deep into the concrete to form a thick hydrophobic layer, and the penetration of water is hence prevented. Therefore, the film formation-free composition is free from the occurrence of pin holes and blisters, it exhibits water-absorption preventing performance which lasts for a long period of time, and it has excellent performance to inhibit the deterioration of concrete. However, the problem with the film formation-free composition is that where water pressure is exerted, the performance for preventing water absorption is not complete and that the carbonation thereof cannot be inhibited since it is permeable to a gas such as carbon dioxide. Further, a silane-containing, penetration-type water-absorption preventer is suitable for the protection of as-built concrete mostly found in civil engineering structures, since the concrete can be treated without altering the texture of the concrete. In general building structures which are required to have aesthetically fine appearances, however, an overcoating is often provided for coloring, etc., and the following problems remain to solve; an increase in working steps, an extension of the working period, and limitation to materials.

Further, the "coating composition" is also classified into an organic solvent-soluble or dispersible one and a water-soluble or water-dispersible one. The organic solvent-soluble or dispersible coating composition is limited in use and field to which it can be applied, since the organic solvent has toxicity, volatility and inflammability. Further, the working environment is aggravated. Therefore, water-dispersible ones are increasingly used.

Water-dispersible, penetration-type water-absorption preventers used to be poor in storage stability and water-absorption preventing performance, while those having excellent properties are recently increasingly proposed. However, water-dispersible compositions have a problem in that they are liable to be rotted or cause mold when stored. Further, water-dispersible compositions are not only poor in storage stability but also poor in antifungal performance on coated surfaces.

It is an object of the present invention to provide a water-dispersible, organic silicon-containing composition having antibacterial and antifungal properties and having excellent stability when stored for a long period of time.

It is another object of the present invention to provide a water-dispersible, organic silicon-containing composition having long lasting water-absorption preventing performance and being capable of permitting facile distinction between a surface to which the composition is applied and a surface to which the composition is not applied just after the composition has been applied.

It is further another object of the present invention to provide a water-dispersible, organic silicon-containing composition which can provide a concrete surface, etc., with an aesthetically fine appearance.

According to the present invention, there is provided a water-dispersible organic silicon-containing composition comprising:

(a) from 1 to 70% by weight based on the composition of an alkylalkoxysilane and/or a condensate thereof;
(b) from 0.1 to 50% by weight based on the alkylalkoxysilane or the condensate thereof of an emulsifier comprising

a nonionic emulsifier and from 0.01 to 20% by weight of an anionic emulsifier based on the total amount of emulsifier;
(c) a bactericide or fungicide;
(d) water; and
(e) from 0.005 to 20% by weight based on the composition of a water repellent.

Further, according to the present invention, there is also provided a water-dispersible, organic silicon-containing composition comprising:

(a) from 1 to 70% by weight based on the composition of an alkylalkoxysilane and/or a condensate thereof;
(b) from 0.1 to 50% by weight based on the alkylalkoxysilane or the condensate thereof of an emulsifier comprising a nonionic emulsifier and from 0.01 to 20% by weight of an anionic emulsifier based on the total amount of emulsifier;
(c) a bactericide or fungicide;
(d) water;
(e) a water-dispersible resin; and
(f) a pigment.

Although not specially limited, the alkylalkoxysilane and the condensate thereof used in the present invention include alkyltrialkoxysilane, dialkyldialkoxysilane, trialkylmonoalkoxysilane and condensates of these. Generally, the alkylalkoxysilane refers to a compound in which at least one alkyl group having 1 to 20 carbon atoms and at least one alkoxy group having 1 to 4 carbon atoms directly bonds to a silicon atom.

Examples of the above alkylalkoxysilane include alkyltrialkoxysilanes such as methyltrimethoxysilane, methyltriethoxysilane, ethyltrimethoxysilane, ethyltriethoxysilane, propyltrimethoxysilane, ethyltriethoxysilane, butyltrimethoxysilane, butyltriethoxysilane, pentyltrimethoxysilane, pentyltriethoxysilane, hexyltrimethoxysilane, pentyltriethoxysilane, heptyltrimethoxysilane, heptyltriethoxysilane, octyltrimethoxysilane, octyltriethoxysilane, nonyltrimethoxysilane, nonyltriethoxysilane, decyltrimethoxysilane, decyltriethoxysilane, undecyltrimethoxysilane, undecyltriethoxysilane, dodecyltrimethoxysilane, dodecyltriethoxysilane, tridecyltrimethoxysilane, tridecyltriethoxysilane, tetradecyltrimethoxysilane, tetradecyltriethoxysilane, pentadecyltrimethoxysilane, pentadecyltriethoxysilane, hexadecyltrimethoxysilane, hexadecyltriethoxysilane, heptadecyltrimethoxysilane, heptadecyltriethoxysilane, octadecyltrimethoxysilane, octadecyltriethoxysilane, nonadecyltrimethoxysilane, nonadecyltriethoxysilane, eicosyltrimethoxysilane and eicosyltriethoxysilane; aryltrialkoxysilanes such as phenyltrimethoxysilane and phenyltriethoxysilane; dialkyldialkoxysilanes such as dimethyldimethoxysilane, octylmethyldimethoxysilane and octadecylmethyldimethoxysilane; diphenyldimethoxysilane; diaryldialkoxysilanes; and fluoroalkylalkoxysilanes such as XC95-418, XC95-468, XC95-470 and XC95-472 (trade names, supplied by Toshiba Silicone Co., Ltd.). The above alkylalkoxysilanes may be used alone or in combination, and further, they may be also used in the form of a partial condensation product.

When the number of carbon atoms of the alkyl group directly bonding to the silicon of the alkylalkoxysilane is smaller than 6, the alkylalkoxysilane shows very high hydrolysis properties and volatility when formed into an aqueous emulsion. Therefore, after the alkylalkoxysilane is applied to a substrate surface, part of the alkylalkoxysilane reacts with the substrate surface, and the penetration of the water-dispersible composition into the substrate is retarded. While the penetration is retarded, an unreacted silane component volatilizes. As a result, the substrate surface alone is imparted with water repellency. Preferably, therefore, the alkylalkoxysilane whose alkyl group has 5 or less carbon atoms is subjected to partial hydrolysis condensation. Further, when the number of carbon atoms of the alkyl group directly bonding to the silicon atom is greater than 20, the alkylalkoxysilane hardly penetrates a substrate since its molecular weight is too large. It is hence preferred to use an alkylalkoxysilane whose alkyl group has 20 or less carbon atoms.

When the alkoxy group is a methoxy group, the composition is poor in stability under highly alkaline conditions, and the alkylalkoxysilane is liable to react with a substrate surface before the penetration of the composition or the alkylalkoxysilane is liable to undergo a condensation reaction. Further, the composition is poor in stability in water, and when the composition is stored for a long period of time, the composition may hardly penetrate a substrate since the alkylalkoxysilane may have too high a molecular weight. It is therefore preferred to use the alkylalkoxysilane whose alkoxy group is an ethoxy group. When the alkoxy group has a carbon chain in a number equal to, or greater than, the number of carbon atoms of a propoxy group, the bonding of the alkylalkoxysilane to a substrate, even when the composition penetrates the substrate, tends to be delayed all the more since the alkylalkoxysilane is stabler.

The anionic emulsifier is not specially limited. Examples of the anionic emulsifier include fatty acid salt, alkylsulfate, alkylarylsulfonate, alkylnaphthalenesulfonate, dialkylsulfosuccinate, alkyldiaryl ether disulfonate, alkylphosphate, polyoxyethylene alkyl sulfate, polyoxyethylene alkyl aryl ether sulfate, a naphthalene-formalin condensate and polyoxyethylene alkyl phosphate.

The nonionic emulsifier is not specially limited. Examples of the nonionic emulsifier include polyoxyethylene alkyl ether, polyoxyethylene alkyl aryl ether, a polyoxyethylene oxypropylene block copolymer, sorbitan fatty acid ester,

polyoxyethylene sorbitan fatty acid ester, polyoxyethylene sorbitol fatty acid ester, glycerin fatty acid ester, polyoxyethylene fatty acid ester and polyoxyethylene alkyl amine.

Further, a silicone-containing nonionc emulsifier and a fluorine-containing nonionic emulsifier may be used.

The silicone-containing nonionic emulsifier is, for example, a polyalkylene-modified polydimethylsiloxane compound of the following formula (I) or (II).

$$CH_3-\underset{CH_3}{\overset{CH_3}{Si}}-O(\underset{CH_3}{\overset{CH_3}{Si}}-O)_m(\underset{C_3H_6(OC_2H_4)_a(OC_3H_6)_bOR}{\overset{CH_3}{Si}}-O)_n-\underset{CH_3}{\overset{CH_3}{Si}}-CH_3 \qquad (I)$$

wherein:

R = alkyl or H
a, b, m and n = integers

$$CH_3-Si[(\underset{CH_3}{\overset{CH_3}{Si}}-O)_p(OC_2H_4)_c(OC_3H_6)_dOR]_3 \qquad (II)$$

wherein:

R = alkyl or H
c, d and p = integers

The fluorine-containing nonionic emulsifier is, for example, a fluorinated alkyl group-containing polyalkylene oxide compound of the following formula (III),

$$C_8F_{17}SO_2\overset{C_3H_7}{(}CH_2CH_2O)_eH \qquad (III)$$

wherein:
e = integer

For emulsifying the silane component, the amount of the anionic emulsifier in the emulsifier is from 0.01 to 20 % by weight, preferably 0.1 to 5 % by weight. When the nonionic emulsifier is used alone, when the anionic emulsifier is used alone, or when the amount of the anionic emulsifier is less than 0.01 % by weight based on the total emulsifier amount or exceeds 20 % by weight based on the total emulsifier amount, it is difficult to prepare a stable emulsion, and the composition is liable to undergo separation. Further, it is necessary to limit the emulsification conditions too severely.

For emulsifying the silane component, the amount of the emulsifier based on the silane component amount is from 0.1 to 50 % by weight, preferably 0.1 to 5 % by weight, more preferably 0.1 to 0.5 % by weight. When the above amount is less than 0.1 % by weight, it is difficult to obtain a stable emulsion, and the composition is liable to alter with time. When it is more than 50 % by weight, no sufficient water-absorption preventing performance is obtained.

The bactericide or fungicide is not specially limited, and can be selected from those compounds which are generally used in emulsions of coating compositions to be stored and which work for preventing fungi on a coated surface. Examples of the bactericide or fungicide include haloallylsulfone compounds, iodopropargyl compounds, N-haloalkylthio compounds, benzimidazole compounds, nitrile compounds, pyridine compounds, 8-oxyquinoline compounds, benzothiazole compounds, isothiazoline compounds, organotin compounds, phenolic compounds, quaternary ammonium salt compounds, triazine compounds, thiadiazine compounds, anilide compounds, adamantane compounds, dithiocarbamate compounds, inorganic salt compounds and brominated indanone compounds. Of the above bactericides

or fungicides, those which are easily soluble in water are used as bactericides, and those which are sparingly soluble in water are used as fungicides. These bactericides or fungicides may be used alone Or in combination.

Further, a combination of the bactericide with the fungicide naturally exhibits both the performance for preventing rotting during storage and the performance for preventing fungi on a coated surface. An antibacterial/antifungal agent can be used alone. Moreover, a combination of a water-soluble fungicide which is easily released and an oil-soluble fungicide which is slowly released exhibits antifungal performance which can last long. It is necessary to consider toxicity and the stability and dispersibility of an emulsion for selecting the bactericide or fungicide.

The bactericide or fungicide is preferably an isothiazoline-containing compound. Particularly effective is an antibacterial and antifungal agent which is a mixture of an isothiazoline compound having high antibacterial effect such as 5-chloro-2-methyl-4-isothiazolin-3-one, 2-methyl-4-isothiazolin-3-one or 1,2-benzoisothiazolin-3-one with an isothiazoline compound having high antifungal effect such as 2-n-octyl-4-isothiazolin-3-one.

The amount of the bactericide or fungicide is not especially limited so long as the antibacterial or antifungal effect is exhibited and so long as the stability of an emulsion is not impaired. Generally, the amount of the bactericide or fungicide is 0.1 to 1 % by weight based on the total amount of the composition.

Typically, the composition of the invention for pH adjustment further comprises an alkaline compound. The alkaline compound is not specially limited, and can be selected from inorganic basic compounds such as sodium hydroxide, potassium hydroxide, calcium hydroxide and ammonia, and organic basic compounds such as amine, aniline and pyridine. The alkaline compound is incorporated preferably in such an amount that the prepared emulsion has pH of 7 to 10. When the pH of the emulsion is outside the above range, the alkylalkoxysilane is liable to undergo condensation. In particular, when the pH is smaller than 7, the hydrolysis is promoted and the condensation rapidly proceeds. When the pH exceeds 10, not only the emulsion is unstable but also there arises a problem in working.

The silane component concentration in the water-dispersible organic silicon-containing composition is 1 to 70 % by weight. When the silane component concentration is less than 1 % by weight, it is difficult to impart concrete with sufficient water-absorption preventing performance when the composition is applied once. Further, the penetration of the composition applied for a second time or thereafter is decreased. Therefore, an emulsion having a silane component concentration of less than 1 % is not suitable for water-absoprtion preventing purpose. When the silane component concentration exceeds 70 % by weight, it is very difficult to form an emulsion.

For clearly distinguishing a portion to which the composition is applied and a portion to which the composition is not yet applied, the composition contains a water repellent.

Although not specially limited, the water repellent is selected from zirconium-containing water-dispersible emulsion water repellents such as Zircopel CA, CA-1, FA, FA-S and RP (supplied by Dai-ichi Kigenso K.K.); fluorine-containing water-dispersible emulsion water repellents such as Asahi Guards AG-310, AG-460X, AG-471, AG-710, AG-730, AG-740, AG-770, AG-780 and AG-800 (supplied by Meisei Kagaku Kogyo Co., Ltd.); and silicon-containing water-dispersible emulsion water repellents such as Polon C(supplied by Shin-Etsu Chemical Co., Ltd.).

Typically, the water repellent is a zirconium-containing or fluorine-containing water-dispersible emulsion water repellent.

When the above water repellent is used, a water-dispersible composition having the functions of both a water repellent and a water-absorption preventer can be obtained by any one of the following methods (1) and (2), although the method for forming the above water-dispersible composition shall not be limited thereto.

(1) A method in which the alkylalkoxysilane and/or its condensate is pre-emulsified with the emulsifier to form a water-dispersible emulsion of the alkylalkoxysilane and/or its condensate, the water repellent is emulsified with the emulsifier to form a water-dispersible emulsion of the water repellent, and the water-dispersible emulsion of the alkylalkoxysilane or its condensate, the water-dispersible emulsion of the water repellent and the bactericide or fungicide are mixed.
(2) A method in which a mixture containing the alkylalkoxysilane and/or its condensate, the emulsifier, the bactericide or fungicide, water and optionally the alkaline compound is stirred together with an emulsifiable water repellent at a high rate by means of an emulsifying apparatus such as a homomixer.

The amount of the water repellent based on the total amount of the composition is 0.005 to 20 % by weight.

When the above amount is less than 0.005 % by weight, no sufficient water repellency is obtained. When it exceeds 20 % by weight, the surface state of concrete, particularly concrete surface hue, may change.

The composition of the invention containing an water-repellent may further comprise a water-dispersible resin and a pigment to provide a concrete surface with an aesthetically fine appearance. The water-dispersible resin is typically present in an amount of at least 10% by weight based on the composition. A coating of the water-dispersible resin shields a concrete surface from carbon dioxide, and the carbonation of the concrete can be inhibited. The term "carbonation" of concrete refers to the formation of calcium carbonate by a reaction of calcium hydroxide in concrete with carbon dioxide in air. The carbonation proceeds to be close to reinforcing steel in concrete, and corrodes the reinforcing

steel.

Although not specially limited, the water-dispersible resin includes anionic, nonionic and cationic water-soluble resins and emulsion resins such as those obtained by making an acrylic resin, an epoxy resin, a urethane resin, a silicone resin, a polyester resin, an acrylsilicone resin and a fluorine resin water-soluble or water-dispersible or by emulsion polymerizing these resins.

Examples of the anionic water-soluble resin include an anionic acrylic water-soluble resin, an α-olefin-maleic anhydride resin and liquid maleated polybutadiene. Examples of the nonionic water-soluble resin include polyvinyl alcohol and cellulose derivative. Examples of the cationic water-soluble resin include a cationic acrylic water-soluble resin, chitosan, polyethyleneimine and polyacrylic acid hydrazide. Examples of the emulsion resin include a styrene-butadiene copolymer, an ethylene-vinyl acetate copolymer and a vinylidene chloride-vinyl chloride emulsion copolymer. Further, the water-dispersible resin may contain colloidal silica and alumina sol.

Although not specially limited, examples of the pigment include organic pigments such as phthalocyanine pigments, thioindigo pigments, anthraquinone pigments, perylene pigments, dioxazine pigments, quinacridone pigments, coupling azo pigments, condensation azo pigments and chelate azo pigments; and inorganic pigments such as chrome yellow, zinc yellow, cadmium yellow, naples yellow (antimony yellow), nickel titanium yellow, ultramarine yellow, chrome red, cadmium red, cadmium mercury sulfide, molybdenum red, molybdenum orange (chrome vermilion), iron oxide red, iron oxide yellow, prussian blue, ultramarine, chrome green, zinc green, manganese violet, titanium oxide, chromium oxide, zinc oxide and carbon.

The above pigment may be used in the form of a dispersion prepared by dispersing it in water in the presence of an emulsifier.

The water-dispersible resin and pigment are incorporated into the water-dispersible organic silicon-containing composition of the present invention, whereby there can be provided a water-dispersible, coloring protection material which exhibits the function of a penetration type water-absorption preventer for concrete and the functions of preventing water having high pressure, preventing the carbonation and imparting a surface with an aesthetically fine appearance.

The water-dispersible, coloring protection material can be produced by any one of the following methods.

(1) A method in which a dispersion of the alkylalkoxysilane and/or its condensate in water, a dispersion of the water-dispersible resin in water and a dispersion of the pigment in water are respectively prepared in the presence of the emulsifier, and the dispersions were mixed together with the bactericide or fungicide.

(2) A method in which the alkylalkoxysilane and/or its condensate are/is mixed with, and dispersed in, a water-dispersible coating composition containing the waterdispersible resin, the pigment, the emulsifier, the bactericide or fungicide and water.

(3) A method in which the alkylalkoxysilane and/or its condensate, the water-dispersible resin and the pigment are emulsified at once in the presence of the emulsifier and the bactericide or fungicide.

The amounts of the above components in the coloring protection material are not specially limited, and can be determined depending upon use so long as the components can be homogeneously mixed or dispersed. In general, however, the amount of the alkylalkoxysilane is required to be at least 10 % by weight for forming a hydrophobic layer having a thickness sufficient for the protection of concrete. The water-dispersible resin is typically present in an amount of at least 10 % by weight for coloring and coating a concrete surface. The amount of the emulsifier is preferably 5 % by weight or less for obtaining sufficient water-absorption preventing performance and water resistant performance.

Some water-dispersible emulsion water repellents or water-dispersible resins sometimes contain an emulsifier, or an emulsifier is required to make some pigments water-dispersible. The emulsifier used for these purposes is not specially limited in the kind and amount, and an anionic emulsifier, a nonionic emulsifier, a cationic emulsifier and an amphoteric emulsifier can be used in any amount.

Examples of the anionic emulsifier and the nonionic emulsifier include those described already.

Examples of the cationic emulsifier include an alkylamine salt, a quaternary ammonium salt, an alkylpyridinium salt and an alkylimidazolium salt.

Examples of the amphoteric emulsifier include alkylbetaine, alkylamine oxide and phosphatidylcholine (also called lecithin).

The above emulsifiers may be used in combination.

Although being water-dispersible or water-based, the water-dispersible, organic silicon-containing composition of the present invention can be stored for a long period of time without being rotted. It penetrates deep into a construction and civil engineering material such as concrete, and bonds to a hydrophilic group of its surface layer portion to form a hydrophobic layer, whereby the material to which it has been applied can exhibit excellent water-absorption preventing performance, water resistance and antibacterial performance.

At an initial time when the surface to which the water-dispersible, organic silicon-containing composition has been applied has a high water content, the fungicide which is gradually eluted from the surface layer portion prevents the

occurrence of fungi. In the long run, the substrate (material) surface is prevented from coming into a wet state by the water-absorption preventing activity of the silane-impregnated layer (hydrophobic layer) of the surface layer portion, and as a result, the occurrence of fungi is prevented.

Further, by incorporating the water repellent, a portion to which the composition has been applied and a portion to which no composition has been applied can be easily distinguished. By incorporating the water-dispersible resin and pigment, an aesthetically fine appearance can be obtained in addition to water-absorption preventing performance and water resistance.

As explained above, the water-dispersible, organic silicon-containing composition of the present invention is very useful in the construction and civil engineering field.

Examples

The present invention will be explained more in detail hereinafter with reference to Examples, in which "%" stands for "% by weight".

Comparative Example 1

400 Grams of n-hexyltriethoxysilane, 2.0 g of polyoxyethylene stearyl ether, 0.02 g of sodium laurylsulfate, 1.0 g of an aqueous solution containing 1 % of sodium hydroxide, 0.5 g of 1,2-benzoisothiazolin-3-one and 2.0 g of 2-n-octyl-4-isothiazolin-3-one were mixed, and the mixture was stirred with a homomixer at a high rate. 600 Grams of water was gradually added to the above-stirred mixture to give a white aqueous emulsion, which was stable at room temperature for at least 6 months.

Comparative Example 2

400 Grams of n-hexyltriethoxysilane, 200 g of polyoxyethylene stearyl ether, 1.0 g of an aqueous solution containing 1 % of sodium hydroxide, 0.5 g of 1,2-benzoisothiazolin-3-one and 2.0 g of 2-n-octyl-4-isothiazolin-3-one were mixed, and the mixture was stirred with a homomixer at a high rate. 600 Grams of water was gradually added to the above-stirred mixture to give a white aqueous emulsion, which was stable at room temperature for at least 6 months.

Comparative Example 3

400 Grams of n-hexyltriethoxysilane, 2.0 g of polyoxyethylene stearyl ether, 1.0 g of an aqueous solution containing 1 % of sodium hydroxide, 0.5 g of 1,2-benzoisothiazolin-3-one and 2.0 g of 2-n-octyl-4-isothiazolin-3-one were mixed, and the mixture was stirred with a homomixer at a high rate. 600 Grams of water was gradually added to the above-stirred mixture to give a white aqueous emulsion, which was separated in one day at room temperature.

Comparative Example 4

400 Grams of n-hexyltriethoxysilane, 2.0 g of polyoxyethylene stearyl ether, 0.02 g of sodium laurylsulfate and 1.0 g of an aqueous solution containing 1 % of sodium hydroxide were mixed, and the mixture was stirred with a homomixer at a high rate. 600 Grams of water was gradually added to the above-stirred mixture to give a white aqueous emulsion, which was stable at room temperature for at least 6 months.

The aqueous emulsions obtained in Comparative Examples 1 to 4 were evaluated for their performances by the following methods. Table 1 shows the results.

(Antibacterial test)

5 Grams of a sample was placed in an L letter-shaped test tube, and the test tube was set at a constant-temperature shaker of which the water temperature was adjusted to 30°C, and shaken for 5 days. Then, 1 g of the sample was taken out of the test tube and diluted 100 times with sterilized water. The diluted solution was cultured on a flat plate, and the number of living fungi was detected (shaken only).

The sample prepared in Comparative Example 4 was used as septic seeds, since it contained no antibactericide and bacteria was detected therein.

The test tube containing the remaining sample was further shaken for 7 days. Then, 4 g of the sample obtained in Comparative Example 4 was added, and the test tube was shaken for 3 days. Thereafter, l g of the sample was taken out of the test tube and diluted 100 times with sterilized water. The diluted solution was cultured on a flat plate, and the number of living fungi was detected.

. Culture conditions

Bacteria: Broth agar medium, 28°C, 72 hours
Fungi: Potato dextrose agar medium, 28°C, 72 hours

(Antifungal test)

A 3 cm x 3 cm x 0.2 cm asbestos slate was impregnated with a sample and dried at room temperature for 28 days. Then, according to "Test of coating composition of JIS Z 2911 (Fungus resistance test method)", the slate was placed on a flat plate medium, and a suspension of a spore mixture of the following five kinds of mold was sprayed to the slate and medium and cultured at a temperature of 28±2°C at a humidity of 95 %.

. Fungi

Aspergillus niger FERM S-2
Penicillium Funiculosum FERM S-6
Cladosporium cladosporides FERM S-8
Aureobasidium Pullulans FERM S-9
Giocladium Virens FERM S10

. Medium

| | |
|---|---|
| Purified water | 1,000 ml |
| Glucose | 40 g |
| Peptone | 10 g |
| Agar | 25 g |

. Evaluation standard

3: No growth of hyphae on an inoculation portion of the test slate was observed.
2: The area where hyphae grew in an inoculation portion of the test slate did not exceed 1/3 of the total area of the inoculation portion.
1: The area where hyphae grew in an inoculation portion of the test slate was more than 1/3 of the total area of the inoculation portion.

(pH measurement)

Measured for pH at 25°C

(Emulsion stability test)

20 Grams of a sample was placed into a 30 ml bottle and the bottle was tightly closed. The bottle was allowed to stand at room temperature, and the sample was visually observed for an emulsion state.

(Test on stability with time)

20 Grams of a sample was placed into a 30 ml bottle, and the bottle was tightly closed and stored for 1 month. Then, the sample was applied to a mortar specimen (JIS R 5201) at a rate of 300 g/$m^2$ and dried at room temperature for 24 hours, and then the sample-applied surface was observed.

A: No difference between the surface to which the sample had been applied and a surface to which no sample was applied. (No wet color)
X: The sample-applied surface had a wet color.

(Water-absorption test)

A 7 cm x 7 cm 2 cm mortar specimen (JIS R 5201) was aged at room temperature for at least 7 days. An aqueous sample was applied to the entire surface of the mortar specimen at a rate of 300 g/$m^2$ and dried at room temperature for 28 days. Then, the sample-applied specimen and a mortar specimen to which no sample had been applied were tested for water absorption for 24 hours according to JIS A 1404, and the ratio of the water absorption of the sample applied specimen to the water absorption of the mortar specimen to which no sample was applied was calculated by the following equation.

Ratio of water absorption for 24 hours = (water absorption for 24 hours by sample-applied specimen)/(water absorption for 24 hours by specimen to which no sample was applied) x 100

Table 1: Test (1) for evaluation of performance

| | Antibacterial test (Number of living bacteria and fungi: pc/g) | | | |
|---|---|---|---|---|
| | Broth agar medium | | Potato dextrose agar medium | |
| | Shaken only | Fungi added | Shaken only | Fungi added |
| CEx. 1 | $<10^2$ | $<10^2$ | $<10^2$ | $<10^2$ |
| CEx. 2 | $<10^2$ | $<10^2$ | $<10^2$ | $<10^2$ |
| CEx. 3 | $<10^2$ | $<10^2$ | $<10^2$ | $<10^2$ |
| CEx. 4 | $7.8 \times 10^5$ | - | $7.2 \times 10^5$ | - |

Table 1 (continued)

| | Antifungal performance | pH | Emulsion stability | Stability with time | Water-absorption ratio for 24 hours |
|---|---|---|---|---|---|
| CEx. 1 | 3 | 8.1 | 6 months or more | A | 7.1 |
| CEx. 2 | 3 | 8.2 | 6 months or more | A | 24.6 |
| CEx. 3 | 3 | 8.1 | 1 day or less | - | 7.2 |
| CEx. 4 | 1 | 8.0 | 6 months or more | A | 7.1 |

Example 1

500 Grams of n-hexyltriethoxysilane, 2.5 g of polyoxyethylene stearyl ether, 0.03 g of sodium lauryl sulfate, 1.0 g of an aqueous solution containing 1% of sodium hydroxide, 0.5 g of 1,2-benzoisothiazolin-3-one and 2.0 g of 2-n-octyl-4-isothiazolin-3-one were mixed, and the mixture was stirred with a homomixer at a high rate. 500 Grams of water was

gradually added to the above-stirred mixture to give a white aqueous emulsion, which was stable at room temperature for at least 6 months. 25 Grams of a zirconium-containing water-dispersible emulsion water repellent (Zircopel CA) and 25 g of water were mixed with 200 g of the above white aqueous emulsion to give a white emulsion, which was stable at room temperature for at least 6 months.

Example 2

A white emulsion was obtained in the same manner as in Example 1 except that the zirconium-containing water-dispersible emulsion water repellent (Zircopel CA) was replaced with a fluorine-containing water-dispersible emulsion water repellent (Asahi Guard AG-710). The white emulsion was stable at room temperature for at least 6 months.

Comparative Example 5

25 Grams of a zirconium-containing water-dispersible emulsion water repellent (Zircopel CA) was diluted with 225 g of water while it was stirred at 200 rpm, to give a white emulsion. The white emulsion was stable at room temperature for at least 6 months.

Comparative Example 6

25 Grams of a fluorine-containing water-dispersible emulsion water repellent (Asahi Guard AG-740) was diluted with 225 g of water while it was stirred at 200 rpm, to give a white emulsion. The white emulsion was stable at room temperature for at least 6 months.

The aqueous emulsions obtained in Examples 1 and 2 and Comparative Examples 1,5 and 6 were tested for the evaluation of the following performances. Table 2 shows the results.

(Water repellency test)

A 7 cm x 7 cm x 2 cm mortar specimen (JIS R 5201) was aged at room temperature for at least 7 days, and an aqueous emulsion sample was applied to the bottom surface of the mortar sample at a rate of 300 g/$m^2$ and dried at room temperature for 28 days. Then, a few drops of water was dropped on the surface, and the sample was evaluated as follows.

A: The contact angle of water drops was at least 90°.
B: The contact angle of water drops was less than 90°C.
X: Water did not form spherical drops, but was absorbed immediately.

(Penetration performance test)

The specimen used in the water repellency test was cut, and a methylene blue aqueous solution was applied to the cross section thereof. A hydrophobic layer which was not stained due to the water-repellent activity was measured for thicknesses in six places at intervals of 1 cm, and the average value was determined.

(Cyclical test in hot, cold, dry and wet state)

After the (initial) water absorption ratio of a specimen was determined according to the water absorption test, the specimen was subjected to a cyclical test in hot, cold, dry and wet states, in which the specimen was kept in water at +20°C for 18 hours, in air at -20°C for 3 hour and in air at +50°C for 3 hours as one cycle and this cycle was repeated 10 times. Then, the specimen was dried in air at room temperature for 7 days, and subjected to the water-absorption test to determine its water absorption ratio (after the cyclical test in hot, cold, dry and wet states).

Table 2:

| Test (2) for evaluation of performance | | | | |
|---|---|---|---|---|
| | Depth of penetration mm | Water repellency | Water absorption ratio (%) | |
| | | | Initial | After cyclical test |
| CEx.1 | 4.3 | B | 7.1 | 7.3 |
| Ex.1 | 3.8 | A | 7.0 | 7.4 |

Table 2: (continued)

| Test (2) for evaluation of performance | | | | |
|---|---|---|---|---|
| | Depth of penetration mm | Water repellency | Water absorption ratio (%) | |
| | | | Initial | After cyclical test |
| Ex.2 | 4.0 | A | 7.2 | 7.1 |
| CEx.5 | 0 | A | 9.8 | 87.3 |
| CEx.6 | 0 | A | 10.3 | 84.6 |
| No sample applied | 0 | X | 100 | 100 |

Example 3

600 Grams of n-hexyltriethoxysilane, 3.0 g of polyoxyethylene stearyl ether, 0.03 g of sodium laurysulfate, 1.0 g of an aqueous solution containing 1 % of sodium hydroxide, 0.5 g of 1,2-benzoisothiazolin-3-one and 2.0 g of 2-n-octyl-4-isothiazolin-3-one were mixed, and the mixture was stirred with a homomixer at a high rate. 400 Grams of water was gradually added to the above-stirred mixture to give a white aqueous emulsion, which was stable at room temperature for at least 6 months.

200 Grams of the above-obtained white aqueous emulsion, 7() g of a water-dispersible acrylic emulsion (Nanocryl BCX-2799, supplied by Applicant Company), 30 g of a water-dispersible pigment dispersion (EM White FX-9048, supplied by Applicant Company) and 2 g of a water-dispersible pigment dispersion (EM Blue 2G, supplied by Applicant Company) were mixed to obtain a blue paint.

Comparative Example 7

A blue paint was obtained in the same manner as in Example 3 except that 70 g of Nanocryl BCX-2799 was replaced with 70 g of water.

Comparative Example 8

A blue paint was obtained in the same manner as in Example 3 except that the white aqueous emulsion was replaced with water.

The samples obtained in Comparative Examples 1, 7 and 8 and Example 3 were applied to the entire surfaces of 10 cm x 10 cm x 10 cm concrete specimens (cement/water weight ratio = 60) at a rate of 300 g/$m^2$, and dried at room temperature for 28 days. Then, the specimens were tested for the evaluation of the following performances. Table 3 shows the results.

(Applied surface)

A: No color was removed by wiping the surface with a dry waste.
X: A color (pgiment) was removed by wiping the surface with a dry waste.

(Penetration performance test)

The specimen was cut, and water was applied to the cross section thereof. The water repelling portion of the surface layer was measured for depths in six places, and the average value was determined.

(Water absorption test)

A sample-applied specimen and a concrete specimen to which no sample had been applied were tested for water absorption for 24 hours according to JIS A 1404, and the ratio of the water absorption of the sample-applied specimen to the water absorption of the mortar specimen to which no sample was applied was calculated by the following equation.

Ratio of water absorption for 24 hours = (water absorption for 24 hours by sample-applied specimen)/(water absorption for 24 hours by specimen to which no sample was applied) x 100

(Salt penetration test)

A sample-applied specimen was completely immersed in 3 % salt water for 6 months, and the chloride ion concentration was determined by a potentiometric titration method to calculate a salt content.

(Promoting carbonation test)

A sample-applied specimen was kept in a promoting carbonation chamber having a temperature of 20°c, a relative humidity of 60 % and a CO concentration of 25 % for 3 months, and cut. 1 Grams of a phenolphthalein was dissolved in 90 ml of 95 % ethanol, and water was added to prepare 100 ml of a solution. The solution was sprayed to the cross section of the specimen, and the ratio of an area which showed no red color was measured.

(Area measurement)

By computerized image-processing.

Table 3:

| Test (3) for evaluation of performance | | | | | |
|---|---|---|---|---|---|
| | Applied surface | Depth of penetration (mm) | Water absorption ratio (%) | Salt penetration test Salt content (Cl- %) | Ratio of carbonation area (%) |
| CEx.1 | - | 4.3 | 6.5 | 0.01 | 25.7 |
| Ex.3 | A | 3.7 | 6.9 | 0.01 | 0.9 |
| CEx.7 | X | 4.0 | 6.6 | 0.02 | 24.3 |
| CEx.8 | A | 0 | 15.6 | 0.15 | 4.4 |
| Not applied | - | - | 100 | 0.16 | 30.5 |

**Claims**

**1.** A water-dispersible, organic silicon-containing composition comprising:

(a) from 1 to 70% by weight based on the composition of an alkylalkoxysilane and/or a condensate thereof;
(b) from 0.1 to 50% by weight based on the alkylalkoxysilane or the condensate thereof of an emulsifier comprising a nonionic emulsifier and from 0.01 to 20% by weight of an anionic emulsifier based on the total amount of emulsifier;
(c) a bactericide or fungicide;
(d) water; and
(e) from 0.005 to 20% by weight based on the composition of a water repellent.

**2.** A composition according to claim 1, wherein the bactericide or fungicide is an isothiazoline-containing compound.

**3.** A composition according to claim 1 or 2, wherein the composition further comprises an alkaline compound.

**4.** A composition according to any preceding claim, wherein the water-repellent is a zirconium-containing water-dispersible emulsion water-repellent.

**5.** A composition according to any of claims 1 to 3, wherein the water-repellent is a fluorine-containing water-dispersible emulsion water-repellent.

**6.** A composition according to any one of the preceding claims further comprising (f) a water-dispersible resin, and (g) a pigment.

**7.** A composition according to claim 6, wherein the water-dispersible resin is present in an amount of at least 10% by weight based on the composition.

8. A water-dispersible, organic silicon-containing composition comprising:

(a) from 1 to 70% by weight based on the composition of an alkylalkoxysilane and/or a condensate thereof;
(b) from 0.1 to 50% by weight based on the alkylalkoxysilane or the condensate thereof of an emulsifier comprising a nonionic emulsifier and from 0.01 to 20% by weight of an anionic emulsifier based on the total amount of emulsifier;
(c) a bactericide or fungicide;
(d) water;
(e) a water-dispersible resin; and
(f) a pigment.

## Patentansprüche

1. Wasserdispergierbare, siliciumhaltige organische Zusammensetzung, umfassend:

(a) 1 bis 70 Gew.-%, bezogen auf die Zusammensetzung, eines Alkylalkoxysilans und/oder eines Kondensats desselben;
(b) 0,1 bis 50 Gew.-%, bezogen auf das Alkylalkoxysilan oder das Kondensat desselben, eines Emulgators, der einen nichtionogenen Emulgator und 0,01 bis 20 Gew.-% eines anionischen Emulgators bezogen auf die Gesamtmenge an Emulgator enthält;
(c) ein Bakterizid oder Fungizid;
(d) Wasser; und
(e) 0,005 bis 20 Gew.-%, bezogen auf die Zusammensetzung, eines wasserabweisenden Mittels.

2. Zusammensetzung nach Anspruch 1, bei der das Bakterizid oder Fungizid eine isothiazolinhaltige Verbindung ist.

3. Zusammensetzung nach Anspruch 1 oder 2, bei der die Zusammensetzung des weiteren eine alkalische Verbindung umfaßt.

4. Zusammensetzung nach einem der vorhergehenden Ansprüche, bei der das wasserabweisende Mittel eine zirconiumhaltige wasserdispergierbare Emulsion ist.

5. Zusammensetzung nach einem der Ansprüche 1 bis 3, bei der das wasserabweisende Mittel eine fluorhaltige wasserdispergierbare Emulsion ist.

6. Zusammensetzung nach einem der vorhergehenden Ansprüche, des weiteren umfassend (f) ein wasserdispergierbares Harz und (g) ein Pigment.

7. Zusammensetzung nach Anspruch 6, bei der das wasserdispergierbare Harz in einer Menge von mindestens 10 Gew.-% bezogen auf die Zusammensetzung vorhanden ist.

8. Wasserdispergierbare, siliciumhaltige organische Zusammensetzung, umfassend:

(a) 1 bis 70 Gew.-%, bezogen auf die Zusammensetzung, eines Alkylalkoxysilans und/oder eines Kondensats desselben;
(b) 0,1 bis 50 Gew.-%, bezogen auf das Alkylalkoxysilan oder das Kondensat desselben, eines Emulgators, der einen nichtionogenen Emulgator und 0,01 bis 20 Gew.-% eines anionischen Emulgators bezogen auf die Gesamtmenge an Emulgator enthält;
(c) ein Bakterizid oder Fungizid;
(d) Wasser;
(e) ein wasserdispergierbares Harz; und
(f) ein Pigment.

## Revendications

1. Composition organique dispersable dans l'eau contenant du silicium, comprenant :

(a) de 1 à 70% en poids, sur la base de la composition, d'un alkylalcoxysilane et/ou d'un produit de condensation de celui-ci ;
(b) de 0,1 à 50% en poids, sur la base de l'alkylalcoxysilane ou de son produit de condensation, d'un émulsifiant comprenant un émulsifiant non ionique et de 0,01 à 20% en poids d'un émulsifiant anionique, sur la base de la quantité totale d'émulsifiant ;
(c) un bactéricide ou fongicide ;
(d) de l'eau ; et
(e) de 0,05 à 20% en poids, sur la base de la composition, d'un agent hydrofuge.

**2.** Composition selon la revendication 1, dans laquelle le bactéricide ou fongicide est un composé contenant de l'isothiazoline.

**3.** Composition selon la revendication 1 ou 2, dans laquelle la composition comprend en outre un composé alcalin.

**4.** Composition selon l'une quelconque des revendications précédentes, dans laquelle l'agent hydrofuge est un agent hydrofuge en émulsion dispersable dans l'eau contenant du zirconium.

**5.** Composition selon l'une quelconque des renvendications 1 à 3, dans lequel l'agent hydrofuge est un agent hydrofuge en émulsion dispersable dans l'eau contenant du fluor.

**6.** Composition selon l'une quelconque des renvendications précédentes, comprenant en outre (f) une résine dispersable dans l'eau et (g) un pigment.

**7.** Composition selon la revendication 6, dans laquelle la résine dispersable dans l'eau est présente en une quantité d'au moins 10% en poids, sur la base de la composition.

**8.** Composition organique dispersable dans l'eau contenant du silicium comprenant :

(a) de 1 à 70% en poids, sur la base de la composition, d'un alkylalcoxysilane et/ou d'un produit de condensation de celui-ci ;
(b) de 0,1 à 50% en poids, sur la base de l'alkylalcoxysilane ou de son produit de condensation, d'un émulsifiant comprenant un émulsifiant non ionique et de 0,01 à 20% en poids d'un émulsifiant anionique, sur la base de la quantité totale d'émulsifiant ;
(c) un bactéricide ou fongicide ;
(d) de l'eau ;
(e) une résine dispersable dans l'eau ; et
(f) un pigment.